# EUROPEAN PATENT SPECIFICATION

(11) **EP 1 802 550 B1**
(45) Date of publication and mention of the grant of the patent: **06.08.2014**
(21) Application number: 05795522.1
(22) Date of filing: 11.10.2005
(51) Int. Cl.: B66C 1/02, B65G 47/91, B25J 15/06

(54) **VACUUM GRIPPER FOR TRANSFERRING ARTICLES**
UNTERDRUCKGREIFER ZUR ÜBERGABE VON ARTIKELN
DISPOSITIF DE PREHENSION PAR ASPIRATION POUR TRANSFERT D'ARTICLES

(30) Priority: 12.10.2004 FI 20045382
(43) Date of publication of application: 04.07.2007
(73) Proprietor: Pinomatic OY, 61800 Kauhajoki (FI)
(72) Inventor: RANTALA, Matti, FI-61800 Kauhajoki (FI); PITKÄRANTA, Juha, FI-61800 Kauhajoki (FI)
(74) Representative: Kolster Oy Ab
(86) International application number: PCT/FI2005/050352
(87) International publication number: WO 2006/040406

(56) References cited:
- DE-A1- 2 146 705
- DE-A1- 3 810 989
- DE-A1- 4 101 248
- DE-U1- 8 815 392
- US-A- 4 155 583
- US-A- 4 389 064
- US-A- 5 297 830

## Description

### BACKGROUND OF THE INVENTION

The invention relates to a device for gripping articles from above, from one side or from below by means of negative pressure. The device may be moved in different positions and places by manpower or mechanically with a robot or another lifting device.

Publication FR 2152957 (Herman) discloses a channel structure of a vacuum gripper in which the channel has a moving ball capable of closing said channel.

Swedish publication SE-C-506603 discloses a channel structure comprising, in connection with a first channel, a second channel having a diameter that is essentially smaller than the diameter of the first channel, whereby the moving ball is capable of closing the first channel when negative pressure is generated in a vacuum space, except for the air flow of the second channel. Such a by-pass channel allows air to pass through it all the time.

Further, both solutions has a metal ball as the closing means. When a gravitationally returning ball is used, said devices are applicable to gripping an article only from above. Publication DE 3810989 discloses an apparatus for handling and transporting articles with the features of the preamble of claim 1, comprising a closure body movable in a suction channel back and forth between an open position and a working position, depending on the pressure gradient between a vacuum side and a working side, in such a manner that, in its working position, the flow cross-section available for the sucked-in air is reduced with respect to the open position.

### BRIEF DESCRIPTION OF THE INVENTION

A new vacuum gripper and an inward relief valve have now been developed. The solution is characterised by what is stated in the independent claims. Preferred embodiments of the invention are set forth in the dependent claims.

One of the aims of the invention is to provide a vacuum gripper structure allowing an article to be gripped from above, from one side or from below. This aim is achieved by providing a cup-like object that moves in the channel. The cup-like construction is, for example, a cylinder inside which a spring is placeable, whereby sudden acceleration, braking or vibration does not hinder the operation. The cup-like construction functions as the support and controller of the spring when the spring moves in the passage of the inward relief valve. Placing the spring at least partially inside the valve cup allows implementation of a small flow channel between the passage and the moving object. The valve cup has a light structure, and it can be manufactured of plastic material, for instance. Further, properties of the vacuum gripper can be changed easily by changing the valve cup and/or spring.

Another aim of the invention is to provide a vacuum gripper construction having low air consumption (energy consumption), because the valve cup of a negative pressure valve according to the invention closes the air flow completely, if required. This is significant for example when the vacuum gripper is provided with a plurality of inward relief valves for gripping articles of different sizes. Thus, the article does not necessarily extend to all inward relief valves.

Yet one of the aims of the invention is to provide a negative pressure valve applicable to be used in a vacuum gripper or the like device.

Advantages of a negative pressure valve and a vacuum gripper include, for instance:

1. The vacuum gripper can grip articles from above, from one side or from below.

2. The valve cup can be manufactured of light material, such as plastic. The valve cup is controlled by the force of the spring, whereby sudden acceleration, braking or vibration does not hinder the operation.

3. Low air consumption (energy consumption) because the cup-like structure closes the air flow completely, if required.

4. When an article generating dust, for instance wood, is gripped, the screen of the valve becomes cleaned when the article is removed, as the normal air pressure forcefully rushes through the valve back to the surface of the article.

5. No pass-by channels or holes required by the operation are needed in the valve frame or valve cup.

6. With regard to the operation of the device, no air containers are needed for providing negative pressure shocks.

The operation of the invention is based on the vacuum gripper being connected by means of a tube system via a three-way closing valve to an object generating negative pressure. The lower surface of the vacuum gripper has an elastic seal that seals the space between the article and the vacuum gripper in an airtight manner, after which the negative pressure is conducted via the three-way closing valve through the device to the surface of the article which causes the article to be attached to the device. The vacuum gripper quickly grips the article after the opening of the three-way valve, once the negative pressure has reached the surface of the article.

### BRIEF DESCRIPTION OF THE FIGURES

The invention will now be described in more detail in connection with preferred embodiments, referring to the attached drawings, of which:
Figure 1 shows a partial cross-section of an embodiment of the vacuum gripper, in which the inward relief valve on the left is shown disassembled and the inward relief valve on the right is shown assembled;
Figure 2 shows a partial blow-up of the vacuum gripper illustrated in Figure 1.

### DETAILED DESCRIPTION OF THE INVENTION

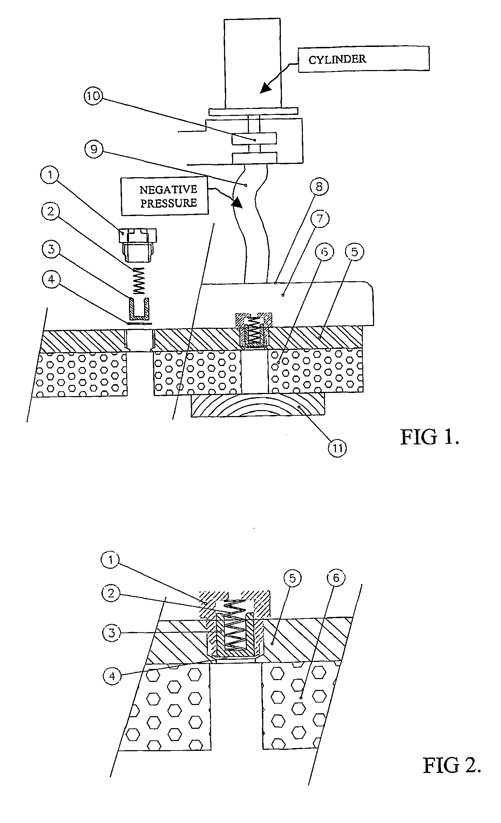

Referring to Figures 1 and 2, in which the valve cup 3 is pressed against a screen 4 by the force of a spring 2. When a three-way valve 10 opens a vacuum channel into a vacuum space 7 of the box, whereby a flow is generated between the valve cup 3 and a valve frame 5.

If the by-pass flow of an article 11 against the hole of a sealing plate 6 in the valve is not sufficient to draw the valve cup 3 against the shoulder of a valve frame 1, the valve stays open.

If the article 11 to be gripped does not close the hole of the sealing plate 6 properly or if the by-pass flow between the valve cup 3 and the valve frame 1 grows otherwise large, the valve cup 3 is pressed against the shoulder of the valve frame 1 and closes the flow through the valve completely.

The flow may grow large for instance if the sealing plate 6 leaks through itself, the surface of the article 11 to be gripped is so uneven that the sealing plate is not properly shaped into the article, the material of the article 11 is so porous that the flow through the article is large. In the case of such a large flow, the flow force of air between the valve cup 3 and the valve frame 1 is sufficient to overcome the force of the spring 2 of the valve cup, whereby the valve cup 3 is pressed against the shoulder of the valve frame 1 and closes the flow through the valve completely.

The valve remains closed due to the effect of the negative pressure in the vacuum space 7 until the negative pressure disappears from the vacuum space 7 when the three-way valve has closed the main flow channel and opened a channel out, whereby the vacuum in the vacuum space 7 of the box is filled with normal air pressure. As a result of this, the spring 2 of the valve cup presses the valve cup 3 off the shoulder of the valve frame 1, and the valve is opened.

The area of the holes of the sealing plate 6 must be sufficiently large in order for the force of the vacuum to keep the article fixedly attached and in order to tightly compress the sealing plate 6 and thus to enable the sealing plate 6 to be tightly shaped to the surface of even an uneven article 11. The material of the sealing plate 6 is foam rubber, which is somewhat porous in such a way that it leaks very slightly through in order for the sealing to be well-shapeable and soft. However, the sealing must be sufficiently dense so as not to allow too much flow through the sealing, so that the amount of air flowing through the valves before closing of the valve can be kept as small as possible for reliable gripping. When the amount of air flowing through the valves is small, the size of the vacuum pump and the tube system can be kept small.

In the embodiment of Figures 1 and 2, a valve plate 7 provided with a plurality of inward relief valves is positioned between the vacuum space 7 of the vacuum gripper and the sealing plate. The valve plate 7 is provided with a plurality of valves one after the other and a few valves in parallel, staggered relative to each other. The positioning of the valves may vary according to the shape and size of the articles 11 to be gripped. The valves should, however, be positioned on the valve plate 5 in such a way that even a narrow article can be gripped reliably when at least one valve is always at the point of the article 11. In a case where the edge of the article 11 becomes only partly positioned at the point of the hole of the sealing plate 6 and the valve placed in it, the valve closes completely and hence thus not lose any negative pressure.

The purpose of the screen 4 is to prevent the access of dirt into the inside of the inward relief valve and to keep the spring 2 of the valve cup as well as the valve cup itself in place. The task of the screen 4 is also to give replacement air to the sealing plate 6 when the article 11 is being detached to enable quick detachment of the article 11 from the sealing plate 6.

The dimensioning of the diameter of the valve cup 3 allows the adjustment of the amount of flow, i.e. by which amount the valve is closed. The outer diameter of the valve cup is 3 to 10 % smaller and preferably 4 to 7 % smaller and still more preferably 5 to 6 % smaller than the inner diameter of the valve frame 1, this difference functioning as the flow channel. The amount of flow is also affected by how much the sealing plate 6 or the article 11 to be gripped leaks through, as well by the surface shape of the article 11 to be gripped. If the valve closes too easily and does not grip the article, the valve is to be provided with a valve cup 3 with a smaller diameter that allows more flow before closing. Owing to the cylindrical structure of the valve cup 3, the spring 2 of the valve cup gets good guidance from the cup edges. The closing edge of the valve cup 3 must be smooth, so that the valve is closed tightly and thus does not lose any negative pressure. There are no holes at the bottom of the valve cup, so the whole of the flow takes place between the valve cup and the valve.

The spring 2 of the valve cup and the light valve cup 3 enable reliable functioning of the vacuum gripper irrespective of the position or vibration and sudden movements and allow a short delay for the valve, during which the system has time to grip the article and compress the sealing plate. In addition, the valve is completely closed if the flow is still too large after said delay.

The frame 1 of the inward relief valve keeps the valve parts in place, guides the movement of the valve cup 3, and the shoulders of the frame function as the countersurface for the valve cup 3 when the valve is closed.

The three-way valve 10 opens a vacuum channel in the vacuum space 7 when the article is being gripped and closes it when the article is being released at the same time as a second channel is opened which lets the negative pressure out of the vacuum space 7.

The use of a box-like vacuum gripper allows even narrow articles to be gripped because there are a plurality of inward relief valves in the box. The positioning of the inward relief valves in the box may vary according to the object of use. In the solution according to the invention, those valves of the vacuum gripper that are not directed at the article 11 are completely closed. If the valves were not completely closed, they would lose some negative pressure without even gripping the article 11. Owing to valves that can be completely closed, the size of the vacuum pump can be reduced, or a vacuum pump with lower production can be selected. Similarly, the tube systems leading to the boxes can be provided with a smaller diameter, and thus the whole gripper structure can be made lighter.

The vacuum gripper entity described above comprises a device in which an object generating negative pressure is connected to a vacuum box 8 via the three-way valve 10 and a tube system 9. The negative pressure is conveyed from between the valve frame 1 and the valve cup 3 via the screen 4 to the surface of the article 11 that is attached to the sealing plate 6, generating a vacuum between the article 11 and the valve plate and generating traction force between the surfaces. If the article 11 is not attached to the sealing plate 6 or if the article is porous, the air flow increases in speed as the pressure difference grows, generating in the valve cup a force that overcomes the counterforce of the spring 2, causing the valve cup 3 to move against the shoulder of the valve frame 1 and closing the air flow, after which the valve cup 3 remains closed with negative pressure, closing the valve. The article 11 is detached from the device by closing the three-way valve 10, whereby there will no longer be any negative pressure directed at the article 11 but normal air pressure arrives in its place via the three-way valve so that the article becomes detached. The moving object is a cup-like cylinder 3 the weight of which is lower than the force of the counterspring 2. The cup-like cylinder is controlled by the force of the spring 2.

It is obvious to a person skilled in the art that as the technology advances, the basic idea of the invention can be implemented in a plurality of ways. The invention and its embodiments are thus not restricted to the example described but may vary within the scope of the claims.

## Claims

1. A vacuum gripper for lifting and transferring articles, the vacuum gripper comprising:
- a vacuum space (7),
- sealing means (6),
- a plurality of inward relief valves arranged between the vacuum space (7) and the sealing means (6), each of the inward relief valves comprising a channel and a moving object (3) arranged in each channel, which channel further comprises, in parallel with the passage, a spring (2) that is arranged to direct forces at the moving object (3), the moving object (3) having a cup-like shape extending to the sides of the spring (2), **characterized in that** the moving object has the property of closing the air flow between the vacuum space and the channel completely if the air flow between the channel and the moving object (3) generates in the moving object (3) a force that overcomes the counterforce of the spring (2).

2. A vacuum gripper according to claim 1, **characterized in that** the sealing means comprise a sealing plate the material of which is foam rubber.

3. A vacuum gripper according to any one of claims 1 to 2, **characterized in that** the foam rubber of the sealing plate has been selected to have such a porosity that it allows predetermined by-pass flow through it in connection with attachment to the article.

4. A vacuum gripper according to any one of the preceding claims, **characterized in that** a screen section has been positioned between the inward relief valve and the sealing means.

5. An inward relief valve intended particularly for a device with which articles can be gripped by means of negative pressure from above, from one side or from below, the inward relief valve comprising:
- a frame part (1),
- a channel provided in the frame part (1), enabling air flow through the frame part,
- a moving object (3) positioned in the channel and arranged to be movable in the channel,
which channel is further provided, in parallel with the passage, a spring (2) that is adapted to direct forces at the moving object (3), the moving object (3) having a cup-like cylindrical shape extending to the sides of the spring (2), **characterized in that** the moving object closes the air flow between the vacuum space and the channel completely if the air flow between the channel and the moving object (3) generates in the moving object (3) a force that overcomes the counterforce of the spring (2).

6. An inward relief valve according to claim 5, **characterized in that** the moving object (3) is manufactured of plastic.

7. An inward relief valve according to any one of the preceding claims, **characterized in that** the outer diameter of the moving object (3) is 3 to 10 % smaller than the inner diameter of the valve frame (1), this difference functioning as the flow channel.

## Patentansprüche

1. Vakuumgreifer zum Heben und Befördern von Gegenständen, welcher Vakuumgreifer aufweist:
- einen Vakuumraum (7),
- Abdichtungsmittel (6),
- eine Vielzahl von Unterdruckventilen, die zwischen dem Vakuumraum (7) und den Abdichtungsmitteln (6) angeordnet sind, wobei jedes der Unterdruckventile einen Kanal und einen in jedem Kanal angeordneten beweglichen Gegenstand (3) aufweist, welcher Kanal ferner eine zur Passage parallele Feder (2) aufweist, die angeordnet ist, Kräfte auf den beweglichen Gegenstand (3) zu richten, welcher bewegliche Gegenstand (3) eine becherartige Form hat, die sich auf die Seiten der Feder (2) erstreckt, **dadurch gekennzeichnet, dass** der bewegliche Gegenstand die Eigenschaft hat, den Luftstrom zwischen dem Vakuumraum und dem Kanal vollkommen zu unterbrechen, falls der Luftstrom zwischen dem Kanal und dem beweglichen Gegenstand (3) im beweglichen Gegenstand (3) eine Kraft erzeugt, die die Gegenkraft der Feder (2) überwindet.

2. Vakuumgreifer nach Patentanspruch 1, **dadurch gekennzeichnet, dass** die Abdichtungsmittel eine Abdichtungsplatte aufweisen, deren Material Schaumgummi ist.

3. Vakuumgreifer nach einem der Patentansprüche 1 bis 2, **dadurch gekennzeichnet, dass** der Schaumgummi der Abdichtungsplatte so ausgewählt ist, dass er eine derartige Porosität aufweist, die einen dadurch stattfindenden vorbestimmten Bypass-Fluss bei der Haftung am Gegenstand erlaubt.

4. Vakuumgreifer nach einem der vorhergehenden Patentansprüche, **dadurch gekennzeichnet, dass** eine Siebpartie zwischen dem Unterdruckventil und den Abdichtungsmitteln positioniert ist.

5. Unterdruckventil, das insbesondere für eine Vorrichtung vorgesehen ist, mit der Gegenstände mittels Unterdruck von oben, von einer Seite oder von unten gegriffen werden können, welches Unterdruckventil aufweist:
- einen Körperteil (1);
- einen im Körperteil (1) vorgesehenen Kanal, der einen Luftstrom durch den Körperteil ermöglicht,
- einen beweglichen Gegenstand (3), der im Kanal positioniert ist und beweglich im Kanal angeordnet ist,
welcher Kanal ferner mit einer zur Passage parallelen Feder (2) versehen ist, die angeordnet ist, Kräfte auf den beweglichen Gegenstand (3) zu richten, welcher bewegliche Gegenstand (3) eine becherartige zylindrische Form hat, die sich auf die Seiten der Feder (2) erstreckt, **dadurch gekennzeichnet, dass** der bewegliche Gegenstand den Luftstrom zwischen dem Vakuumraum und dem Kanal vollkommen unterbricht, falls der Luftstrom zwischen dem Kanal und dem beweglichen Gegenstand (3) im beweglichen Gegenstand (3) eine Kraft erzeugt, die die Gegenkraft der Feder (2) überwindet.

6. Unterdruckventil nach Patentanspruch 5, **dadurch gekennzeichnet, dass** der bewegliche Gegenstand (3) aus Kunststoff hergestellt ist.

7. Unterdruckventil nach einem der vorhergehenden Patentansprüche, **dadurch gekennzeichnet, dass** der Außendurchmesser des beweglichen Gegenstands (3) 3 bis 10% kleiner als der Innendurchmesser des Ventilkörpers (1) ist, wobei dieser Unterschied als Flusskanal dient.

## Revendications

1. Dispositif de préhension à vide pour soulever et transférer des articles, le dispositif de préhension à vide comprenant :
- un espace sous vide (7),
- des moyens d'étanchéité (6),
- plusieurs clapets de décharge vers l'intérieur disposés entre l'espace sous vide (7) et les moyens d'étanchéité (6), chacun des clapets de décharge vers l'intérieur comprenant un canal et un objet mobile (3) disposé dans chaque canal, lequel canal comprend en outre, en parallèle avec le passage, un ressort (2) qui est agencé pour diriger des forces sur l'objet mobile (3), l'objet mobile (3) ayant une forme de coupelle s'étendant vers les côtés du ressort (2), **caractérisé en ce que** l'objet mobile a la propriété de couper complètement l'écoulement d'air entre l'espace sous vide et le canal si l'écoulement d'air entre le canal et l'objet mobile (3) produit dans l'objet mobile (3) une force qui surmonte la force antagoniste du ressort (2).

2. Dispositif de préhension à vide selon la revendication 1, **caractérisé en ce que** les moyens d'étanchéité comprennent une plaque d'étanchéité dont la matière est du caoutchouc mousse.

3. Dispositif de préhension à vide selon l'une quelconque des revendications 1 à 2, **caractérisé en ce que** le caoutchouc mousse de la plaque d'étanchéité a été choisi pour avoir une porosité telle qu'elle permet un écoulement de dérivation prédéterminé à travers celle-ci en liaison avec une fixation sur l'article.

4. Dispositif de préhension à vide selon l'une quelconque des revendications précédentes, **caractérisé en ce qu'**un tronçon de tamis a été positionné entre le clapet de décharge vers l'intérieur et les moyens d'étanchéité.

5. Clapet de décharge vers l'intérieur destiné en particulier à un dispositif avec lequel des articles peuvent être saisis par l'intermédiaire d'une pression négative provenant du dessus, d'un côté ou du dessous, la clapet de décharge vers l'intérieur comprenant:
- une partie de châssis (1),
- un canal agencé dans la partie de châssis (1), permettant un écoulement d'air à travers la partie de châssis,
- un objet mobile (3) positionné dans le canal et agencé de manière à être mobile dans le canal,
lequel canal est en outre muni, en parallèle avec le passage, d'un ressort (2) qui est adapté pour diriger des forces sur l'objet mobile (3), l'objet mobile (3) ayant une forme cylindrique en forme de coupelle s'étendant sur les côtés du ressort (2), **caractérisé en ce que** l'objet mobile coupe complètement l'écoulement de l'air entre l'espace sous vide et le canal si l'écoulement d'air entre le canal et l'objet mobile (3) produit dans l'objet mobile (3) une force qui surmonte la force antagoniste du ressort (2).

6. Clapet de décharge vers l'intérieur selon la revendication 5, **caractérisé en ce que** l'objet mobile (3) est fabriqué en matière plastique.

7. Clapet de décharge vers l'intérieur selon l'une quelconque des revendications précédentes, **caractérisé en ce que** le diamètre extérieur de l'objet mobile (3) est de 3 à 10% plus petit que le diamètre intérieur du châssis de clapet (1), cette différence agissant comme canal d'écoulement.
